# EUROPEAN PATENT SPECIFICATION

(11) **EP 0 907 233 B1**
(45) Date of publication and mention of the grant of the patent: **13.04.2005**
(21) Application number: 98118419.5
(22) Date of filing: 29.09.1998
(51) Int. Cl.: H02G 5/00

(54) **Electric energy distribution system for low voltage electric boards and cabinets**
Elektrisches Energieverteilersystem für Niederspannungsschaltfelder und -schränke
Système de distribution d'énergie pour des tableaux à basse tension et des armoires

(30) Priority: 01.10.1997 IT MI972235
(43) Date of publication of application: 07.04.1999
(73) Proprietor: CABEL SYSTEM S.r.l., 36050 Bolzano Vicentino (Vicenza) (IT)
(72) Inventor: Piccoli, Loriano, 36076 Valdagno (Vicenza) (IT); Bertoldo, Giuliano, 36100 Vicenza (IT)
(74) Representative: Lecce, Giovanni

(56) References cited:
- EP-A- 0 681 355
- DE-B- 1 041 129
- DE-C- 4 404 293
- DE-U- 1 665 178
- FR-A- 2 320 650
- FR-A- 2 515 856
- GB-A- 833 041

## Description

The present invention refers to an electric energy distribution system for low voltage electric boards and cabinets.

More particularly, the present invention relates to an electric energy distribution system for low voltage electric cabinets and boards composed by conductive elements, preferably conductive parallel bars having a stepped or scaled arrangement, particularly suitable for the passage of electric energy of an intensity higher than 630A.

As is known, low voltage boards and cabinets commonly utilised in the industrial field, comprise an electric energy distribution system consisting of a set of conductive elements, such as for instance bars arranged on equidistant parallel planes and at a same height, conductive elements for the connection of each of said bars to respective terminals and a supporting structure comprising connection and locking means with interposed insulating supports.

Said so-to-say "neat" arrangement of the bars, even though it is of common use, exhibits several problems and drawbacks of either a technical-functional or an economic-realisation character.

The first drawback is due to the fact that the arrangement of the bars on parallel planes at the same height makes it difficult to perform correct maintenance intervention for both the bars and the conductive elements connected to the same. In fact, the first bar, which the maintenance-man can see easily, represents a visual and operating obstacle for the subsequent bars; in just the same way, the second bar is an obstacle for the subsequent ones, and so on, so that the last bars in visibility order are of difficult access and operability to the maintenance-man. Also for this reason it is difficult to perform a control of the connection and locking means, commonly screws and pins with related bolts, between said bars and respectively the supporting structure. The periodical control carried out to verify if said connection and fastening means are correctly positioned or if they have undergone alterations or shiftings is difficult because of the aforesaid reduced visibility. Besides, it is even more difficult to carry out modification and/or extension works.

An arrangement of the conductive bars on parallel planes and at the same height involves that each of them must be placed quite far from the adjacent one, in order to allow a sufficient cooling and the possibility of having access to the fastening means, and to reduce the stresses due to the electrodynamic stress that affects the bars during possible short circuits. Besides, said spaced arrangement involves a cost increase since the conductive elements (which generally are elbow-shaped bars) that connect the conductive bars to the respective terminals, must travel for a longer way to reach the terminals, and this involves a higher consumption of conductive materials, usually copper. Moreover, as the electrodynamic stress which creates throughout the length of two parallel and facing bars gives rise to high bending moments, the necessity arises of providing supporting and fastening points at reduced distances; this results in a high number of locking and connecting means and of the related insulating elements.

Object of this invention is to obviate the aforementioned drawbacks.

More particularly, object of this invention is to provide a system of electric distribution, provided with conductive elements, for low voltage electric cabinets and boards, particularly suitable for the passage of electric energy of an intensity higher than 630A, which system allows to reduce the realisation costs and to facilitate maintenance and control operations.

According to its more general aspect, the present invention allows to achieve these and still other objects, by arranging the parallel conductive elements such as bars on different vertical parallel planes at different height levels according to a stepped or scaled arrangement, with a height difference at least equal to the height of each conductive element, and by fixing said conductive elements on an elastic supporting structure.

An electric energy distribution system for low voltage electric cabinets and boards, particularly suitable for the passage of electric energy of an intensity higher than 630A, comprising at least two parallel conductive bars, each bar having a height; a supporting structure for said bars; connecting and fastening means of said bars to said supporting structure and conductive connection elements of each bar to a terminal; wherein: said conductive bars are arranged on vertical parallel planes spaced and at different height levels according to a stepped or scaled arrangement and the vertical height difference between two adjacent parallel planes is at least equal to the heigh, of each bar; according to the preamble of claim 1, is known from DE-A-44 04 253.

The electric energy distribution system of the present invention is characterised in that the supporting structure is elastic so that electrodynamic stress is distributed on a plurality of the adjacent insulating connecting and fastening means thus contributing to an elastic response of the supporting structure.

The supporting structure is elastic enough to stand up to a short-circuit electrodynamic stress at a short-circuit current of 150kA with a peak current of 330kA, and, preferably, it consists of coupled metallic section bars having a "C" or "U"-shaped cross-section.

Each bar may have a thickness comprised between 0,5 and 10 cm. and a height comprised between 1 and 20 cm. , and, preferably, has a rectangular cross section.

The different height levels may have an increasing or a decreasing trend. Alternatively, the two increasing and, respectively decreasing trend arrangements may be specularly arranged with respect to a horizontal plane, or they may face each other with respect to a vertical plane.

Further characteristics and advantages of the present invention will be evident from the following detailed description wherein reference is made to the figures of the attached drawings which represent some preferred, illustrative and non limiting embodiments of the electric energy distribution system of the present invention, and wherein:
Figure 1 shows a prospective schematic view of a bar scaled electric energy distribution system of the present invention;
Figure 2 shows a side schematic view of the electric energy distribution system of Fig.1;
Figures 3, 4 and 6 show the side schematic views of embodiments of the electric energy distribution system of the present invention different from that of Fig.1.

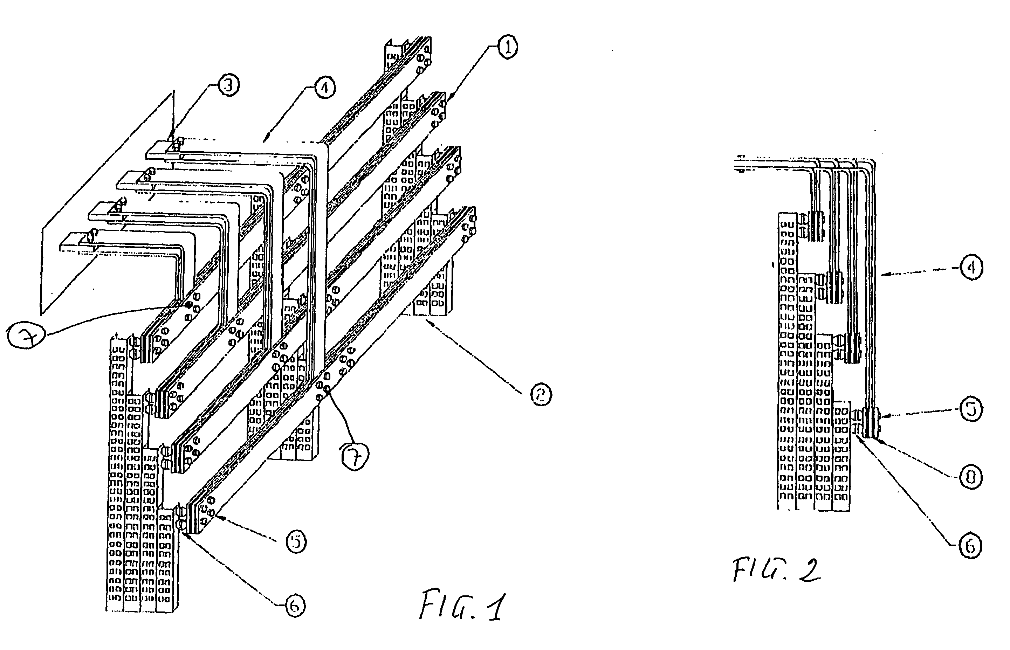

With reference to Figures 1 and 2, the electric energy distribution system for low voltage boards and cabinets of the present invention comprises at least two parallel conductive bars 1, arranged on vertical parallel planes spaced and at different height levels with an increasing trend according to a stepped or scaled arrangement. The height difference between two adjacent parallel planes is at least equal to the height of each bar 1.

The bars 1 are at least two and their number is equal to the phases; generally, they are in number of four, namely, the three phases plus the neutral or the earth bar. Each bar 1 may be constituted by one or more conductive sheets 8 parallel and placed side by side, as for instance two to four.

The total thickness of each bar 1 may vary depending on the intensity of the current to be distributed and the expected electrodynamic stresses; generally, it is comprised between 0.5 and 10 cm.

The height of each bar 1 may vary between 1 and 20 cm.

The bars 1 may be made of any conductive material, such as copper, and have preferably a rectangular cross-section.

The distance along the horizontal plane between two adjacent bars may be zero or it may vary between 0.01 and 10 cm. The vertical distance between the facing edges of two adjacent bars may be zero or may vary between 0.01 and 10 cm.

The bars 1 are supported and fastened to a bearing or supporting structure 2 by means of connection and fastening insulating means. Said connection and fastening means are usually screws or pins with relating bolts 5 which engage in insulating means 6 interposed between bar 1 and the supporting structure 2.

The supporting structure 2 is flexible and, preferably, its flexibility is enough to stand up to a short-circuit electrodynamic stress at a short-circuit current of 150kA with a peak current of 330kA. The supporting structure 2 may be formed by coupled metallic section bars having a "C" or "U"-shaped cross-section.

The supporting structure 2 of the present invention allows to release or allot the electrodynamic stress or the possible vibrations or impact shock on a plurality of adjacent metallic section bars of the supporting structure since the conductive bars 1 are fastened and, therefore, they are not free to slide. The metallic section bars allow a slight bending and, therefore, prevent that the total electrodynamic stress releases only on one of the insulating means. By the elastic supporting structure of the present invention, the electrodynamic stress is distributed on a plurality of adjacent insulating means thus contributing to an elastic response of the supporting structure.

The bars 1 are connected to the relevant terminal 3 by means of connecting conductive elements 4 having preferably an elbow profile, so as to prevent the possibility of undesired and deleterious contacts between bars 1. Said connection conductive elements 4 are connected to the parallel bars 1 through connection and locking means 7, so as to obtain a uniform, lasting and rigid contact between the parts. Said connection conductive elements 4 may be constituted by bars equal to the parallel ones 1, or by electric wires.

The electric energy distribution system of the present invention is particularly suitable for the passage of electric energy of an intensity higher than 630A and, particularly, from 1250 to 6300A or more. The electric energy distribution system of the present invention has overcome a destructive test in the following operating conditions: a current carrying capacity of 6300A, a short-circuit current of 150kA (1s) and a peak current of 330kA.

The scaled arrangement of the bars allows that the stress exercised on two adjacent bars 1, especially after an accidental short-circuit due to the electrodynamic force resulting from the current passage, do not act throughout the whole vertical surface of the bars, but prevailingly near the respective upper and lower edges of two adjacent bars. The bending component of the stresses to which the bars are submitted in case of an accidental short circuit is reduced and the stresses act prevailingly along a direction of greater resistance for the bar, so that the deformation of bars resulting from said stresses is very reduced. This fact, as can be easily understood, involves very interesting advantages, as it allows to reduce both the number of the supporting and locking means (screws or bolts and insulating means) that serve to stiffen the bar, and the thickness of each bar 1 or the number of conductive sheets 8 which form each bar 1, with a high saving in realisation costs.

A further advantage of said arrangement of bars 1 lies in that it allows a greater aeration of the space comprised between two adjacent bars, eliminating therefore the cooling problems and the drawbacks that may arise in the presence of humidity or air dust that reduces the dielectric constant and therefore the insulating capacity of air, with ensuing increase in bar stresses. Having a lower bending stress acting on each bar 1 involves the possibility of arranging said bars on parallel planes placed at a shorter distance and to utilise therefore connection conductive elements 4 of smaller size, due to the reduced connection way between bars 1 and the respective terminals 3, with a remarkable saving of conductive material and a remarkable depth reduction of the board and, consequently, a substantial weight reduction of the final apparatus.

Further, no less important, advantages that are achieved by the arrangement of bars 1 according to the present invention lie in that it is simple for an operator to perform the periodic maintenance said system requires, due to the fact that all the conductive bars 1 are visible and totally accessible and the junction bolts 5 can be immediately inspected.

As the arrangement of the bars allows an easy accessibility of all said connections, it is easier to perform controls of the connection and fastening means 5 and 7, and to verify if possible failures, damages, modifications or extensions have taken place.

No disassembling is needed to do implementations and modifications. The partial flexibility of the supporting structure 2 allows an excellent dynamic behaviour under short-circuit electrodynamic stress and a high degree of resilience.

These properties make the electric boards of the present invention particularly suitable for installation on platforms, ships, big cranes and anti-seismic installations in general.

Figure 3 shows a variant of an electric energy distribution system of the present invention wherein the parallel bars 1 are placed on vertical planes spaced and at different height levels with a decreasing trend according to a scaled arrangement. Such arrangement substantially corresponds to the upside-down one of Figure 1.

Figure 4 shows a further variant of the electric energy distribution system of the present invention resulting from the front coupling of the two systems shown in Figures 1 and 3, according to a facing arrangement and with matching bars.

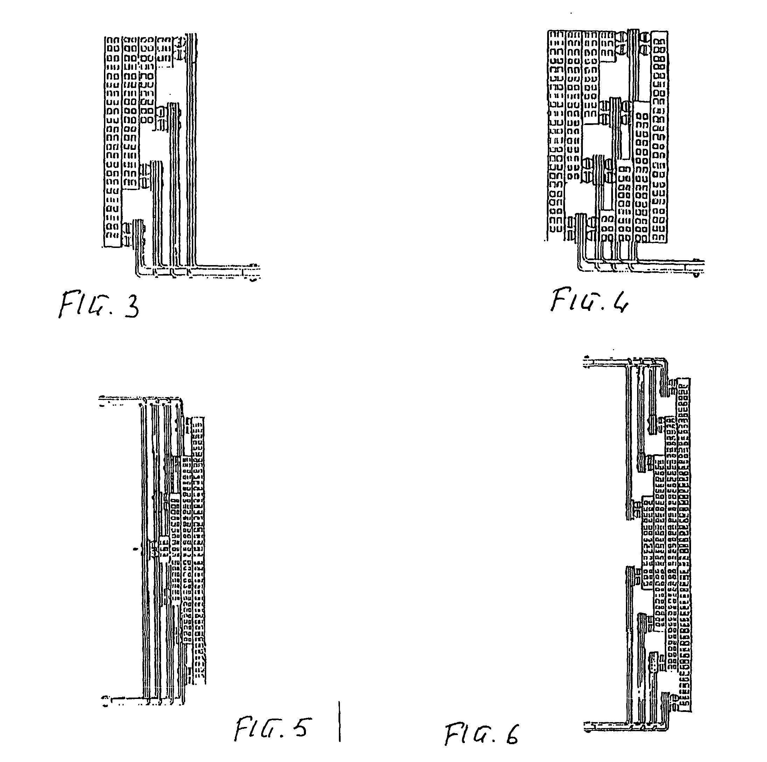

Figure 5 shows a further variant of the electric energy distribution system of the present invention resulting from the specular coupling along a horizontal plane of the two systems shown in Figures 1 and 3, with a common bar.

Figure 6 shows a further variant of the electric energy distribution system of the present invention resulting from the specular coupling along a horizontal plane of the two systems shown in Figures 1 and 3, with all bars spaced.

Each of said systems can be fed by different voltage values, for instance a system with voltage values comprised between 400 and 690V, and the other system with voltage values comprised between 230 and 400V.

Even though the present invention has been described hereabove with reference to some preferred embodiments, modifications and variants may be introduced in the electric energy distribution system of the present invention in the light of the above teachings. Materials, forms and dimensions of the components, as described hereinabove, illustrated in the attached drawings and claimed hereafter, may vary according to the requirements. Besides, all components may be replaceable with other technically equivalent ones. Therefore, it is understood that the present invention comprises all modifications, changes and variants that fall within the scope of the appended claims.

## Claims

1. An electric energy distribution system for low voltage electric cabinets and boards, particularly suitable for the passage of electric energy of an intensity higher than 630A, comprising at least two parallel conductive bars (1),each bar having a vertical height; a supporting structure (2) for said bars (1); connecting and fastening insulating means (5, 6) of said bars (1) to said supporting structure (2), and conductive connection elements (4) of each bar (1) to a terminal (3); said parallel conductive bars (1) extending along vertically spaced horizontal planes having different vertical height levels, according to a stepped or scaled arrangement and the pitch or vertical height difference between two adjacent parallel planes being at least equal to the vertical height of each bar (1); **characterised in that** the supporting structure (2) is elastic so that electrodynamic stress is distributed on a plurality of the adjacent insulating connecting and fastening means (5, 6) thus contributing to an elastic response of the supporting structure.

2. The electric energy distribution system according to claim 1, **characterized in that** the supporting structure (2) is flexible enough to stand up to a short-circuit electrodynamic stress at a short-circuit current of 150kA with a peak current of 330kA.

3. The electric energy distribution system according to claim 1 or 2, **characterized in that** the supporting structure (2) consists of coupled metallic section bars having a "C" or "U"-shaped cross-section.

4. The electric energy distribution system according to anyone of the preceding claims, **characterized in that** each bar (1) has a rectangular cross section, a thickness comprised between 0.5 and 10 cm and a height comprised between 1 and 20 cm.

5. The electric energy distribution system according to anyone of the preceding claims, **characterized in that** the bars (1) are arranged at different height levels with an increasing trend, according to a scaled or stepped arrangement.

6. The electric energy distribution system according to anyone of the preceding claims from 1 to 4, **characterized in that** the bars (1) are arranged at different height levels with a decreasing trend, according to a scaled or stepped arrangement.

7. The electric energy distribution system according to anyone of the preceding claims from 1 to 4, **characterized in that** the bars (1) arranged at different height, levels with an increasing trend and the bars (1) arranged at different height levels with a decreasing trend are frontally coupled according to a facing arrangement with matching bars.

8. The electric energy distribution system according to anyone of the preceding claims from 1 to 4, **characterized in that** the bars (1) arranged at different height levels with an increasing trend and the bars (1) arranged at different height levels with a decreasing trend are specularly coupled with respect to a horizontal plane, the coupled system having a common bar.

9. The electric energy distribution system according to anyone of the preceding claims from 1 to 4, **characterized in that** the bars (1) arranged at different height levels with an increasing trend and the bars (1) arranged at different height levels with a decreasing trend are specularly coupled with respect to a horizontal plane, the coupled system having all the bars spaced.

10. The electric energy distribution system according to anyone of the preceding claims, **characterized in that** the distance along the horizontal plane between two adjacent bars (1) is zero or comprised between 0.01 and 10 cm, and the vertical distance between the facing edges of two adjacent bars (1) is zero or ranges from 0.01 to 10 cm.

11. The electric energy distribution system according to anyone of the preceding claims, **characterized in that** each bar (1) is formed by several conductive sheets (8) parallel and placed side-by-side with respect to each other.

## Patentansprüche

1. Exektroenergieverteilungssystem für Niedrigspannungs-Elektrikschränke und -tafeln, insbesondere für den Durchgang elektrischer Energie einer Stärke von mehr als 630 A geeignet, umfassend zumindest zwei parallele leitende Stäbe (1),
wobei jeder Stab eine vertikale Höhe aufweist; einen Tragaufbau (2) für die Stäbe (1); Anschluß- und Befestigungs-Isoliermittel (5, 6) der Stäbe (1) an dem Tragaufbau (2), und leitende Anschlusselemente (4) jedes Stabs (1) an einem Anschluss (3), wobei die parallelen leitenden Stäbe (1) sich entlang vertikal beabstandeter horizontaler Ebenen mit unterschiedlichen vertikalen Höhenniveaus entsprechend einer gestuften oder leiterartigen Anordnung erstrecken, und wobei der Abstand oder die vertikale Höhendifferenz zwischen zwei benachbarten parallelen Ebenen zumindest gleich der vertikalen Höhen jedes Stabs (1) ist; **dadurch gekennzeichnet, dass** der Tragaufbau (2) elastisch ist, so dass elektrodynamische Belastung auf eine Vielzahl der benachbarten isolierenden Anschluss- und Befestigungsmittel (5, 6) verteilt wird und somit zu einem elastischen Ansprechen des Tragaufbaus beiträgt.

2. Elektroenergieverteilungssystem gemäß Anspruch 1,
**dadurch gekennzeichnet, dass** der Tragaufbau (2) flexibel genug ist, einer elektrodynamischen Kurzschlussbelastung bei einem Kurzschlussstrom von 150 kA mit einem Spitzenstrom von 330 kA standzuhalten.

3. Elektroenergieverteilungssystem gemäß Anspruch 1 oder 2,
**dadurch gekennzeichnet, dass** der Tragaufbau (2) aus gekoppelten, metallischen Abschnittsstäben gebildet ist, welche einen "C"- oder "U"-förmigen Querschnitt aufweisen.

4. Elektroenergieverteilungssystem gemäß irgendeinem der vorhergehenden Ansprüche,
**dadurch gekennzeichnet, dass** jeder Stab (1) einen rechteckigen Querschnitt, eine zwischen 0,5 und 10 cm umfassende Dicke und eine zwischen 1 und 20 cm umfassende Höhe aufweist.

5. Elektroenergieverteilungssystem gemäß irgendeinem der vorhergehenden Ansprüche,
**dadurch gekennzeichnet, dass** die Stäbe auf unterschiedlichen Höhenniveaus mit steigender Tendenz gemäß einer leiterförmigen oder gestuften Anordnung angeordnet sind.

6. Elektroenergieverteilungssystem gemäß irgendeinem der vorhergehenden Ansprüche 1 bis 4,
**dadurch gekennzeichnet, dass** die Stäbe (1) auf unterschiedlichen Höhenniveaus mit fallender Tendenz gemäß einer leiterförmigen oder gestuften Anordnung angeordnet sind.

7. Elektroenergieverteilungssystem gemäß irgendeinem der vorhergehenden Ansprüche 1 bis 4,
**dadurch gekennzeichnet, dass** die Stäbe (1), welche auf unterschiedlichen Höhenniveaus mit einer steigenden Tendenz angeordnet sind, und die Stäbe (1), welche auf unterschiedlichen Höhenniveaus mit einer fallenden Tendenz angeordnet sind, frontal gemäß einer aufeinander weisenden Anordnung mit passenden Stäben gekoppelt sind.

8. Elektroenergieverteilungssystem gemäß irgendeinem der vorhergehenden Ansprüche 1 bis 4,
**dadurch gekennzeichnet, dass** die Stäbe (1), welche auf unterschiedlichen Höhenniveaus mit einer steigenden Tendenz angeordnet sind , und die Stäbe (1), welche auf unterschiedlichen Höhenniveaus mit fallender Tendenz angeordnet sind, bezüglich einer horizontalen Ebene gespiegelt gekoppelt sind, wobei das gekoppelte System einen gemeinsamen Stab aufweist.

9. Elektroenergieverteilungssystem gemäß irgendeinem der vorhergehenden Ansprüche 1 bis 4,
**dadurch gekennzeichnet, dass** die Stäbe (1), welche auf unterschiedlichen Höhenniveaus mit steigender Tendenz angeordnet sind, und die Stäbe (1), welche auf unterschiedlichen Höhenniveaus mit fallender Tendenz angeordnet sind, bezüglich einer horizontalen Ebene gespiegelt gekoppelt sind, wobei das gekoppelte System alle Stäbe beabstandet aufweist.

10. Elektroenergieverteilungssystem gemäß irgendeinem der vorhergehenden Ansprüche,
**dadurch gekennzeichnet, dass**
der Abstand entlang der horizontalen Ebene zwischen zwei benachbarten Stäben (1) Null ist oder zwischen 0,01 und 10 cm umfasst, und der vertikale Abstand zwischen den aufeinander weisenden Kanten von zwei benachbarten Stäben (1) Null ist oder im Bereich von 0,01 bis 10 cm liegt.

11. Elektroenergieverteilungssystem gemäß irgendeinem der vorhergehenden Ansprüche,
**dadurch gekennzeichnet, dass**
jeder Stab (1) durch mehrere leitende Platten (8) ausgebildet ist, welche bezüglich einander parallel und Seite an Seite platziert sind.

## Revendications

1. Système de distribution d'énergie électrique pour des armoires et des tableaux électriques basse tension, particulièrement adapté pour le passage d'énergie électrique d'intensité supérieure à 630 A, comprenant au moins deux barres conductrices parallèles (1), chaque barre présentant une hauteur verticale ; une structure de support (2) pour lesdites barres (1) ; des moyens isolants (5, 6) connectant et fixant lesdites barres (1) à ladite structure de support (2) et des éléments conducteurs (4) connectant chaque barre (1) à une borne (3) ; lesdites barres conductrices parallèles (1) s'étendant dans des plans horizontaux espacés verticalement et ayant des niveaux en hauteur différents, selon une disposition étagée ou échelonnée, le pas ou la différence de hauteur verticale entre deux plans parallèles adjacents étant au moins égal à la hauteur verticale de chaque barre (1) ; **caractérisé en ce que** la structure de support (2) est élastique afin qu'une contrainte électrodynamique soit répartie sur plusieurs moyens de connexion et de fixation isolants (5, 6) adjacents, contribuant ainsi à une réponse élastique de la structure de support.

2. Système de distribution d'énergie électrique selon la revendication 1, **caractérisé en ce que** la structure de support (2) est suffisamment flexible pour résister à une contrainte électrodynamique de court-circuit à un courant de court-circuit de 150 kA avec un courant de crête de 330 kA.

3. Système de distribution d'énergie électrique selon la revendication 1 ou 2, **caractérisé en ce que** la structure de support (2) est constituée de profilés métalliques accouplés présentant une section en « C » ou en « U ».

4. Système de distribution d'énergie électrique selon l'une quelconque des revendications précédentes, **caractérisé en ce que** chaque barre (1) présente une section rectangulaire, une épaisseur comprise entre 0,5 et 10 cm et une hauteur comprise entre 1 et 20 cm.

5. Système de distribution d'énergie électrique selon l'une quelconque des revendications précédentes, **caractérisé en ce que** les barres (1) sont disposées à des niveaux en hauteur différents et allant en croissant, selon une disposition échelonnée ou étagée.

6. Système de distribution d'énergie électrique selon l'une quelconque des revendications précédentes 1 à 4, **caractérisé en ce que** les barres (1) sont disposées à des niveaux en hauteur différents et allant en décroissant, selon une disposition échelonnée ou étagée.

7. Système de distribution d'énergie électrique selon l'une quelconque des revendications précédentes 1 à 4, **caractérisé en ce que** les barres (1) disposées à des niveaux en hauteur différents et allant en croissant et les barres (1) disposées à des niveaux en hauteur différents et allant en décroissant sont accouplées frontalement selon une disposition face à face avec des barres correspondantes.

8. Système de distribution d'énergie électrique selon l'une quelconque des revendications précédentes 1 à 4, **caractérisé en ce que** les barres (1) disposées à des niveaux en hauteur différents et allant en croissant et les barres (1) disposées à des niveaux en hauteur différents et allant en décroissant sont accouplées spéculairement par rapport à un plan horizontal, le système accouplé ayant une barre commune.

9. Système de distribution d'énergie électrique selon l'une quelconque des revendications précédentes 1 à 4, **caractérisé en ce que** les barres (1) disposées à des niveaux en hauteur différents et allant en croissant et les barres (1) disposées à des niveaux en hauteur différents et allant en décroissant sont accouplées spéculairement par rapport à un plan horizontal, toutes les barres du système accouplé étant espacées.

10. Système de distribution d'énergie électrique selon l'une quelconque des revendications précédentes, **caractérisé en ce que** la distance dans le plan horizontal entre deux barres (1) adjacentes est nulle ou comprise entre 0,01 et 10 cm et la distance verticale entre les bords se faisant face de deux barres (1) adjacentes est nulle ou va de 0,01 à 10 cm.

11. Système de distribution d'énergie électrique selon l'une quelconque des revendications précédentes, **caractérisé en ce que** chaque barre (1) est formée par plusieurs feuilles conductrices (8) parallèles et placées côte à côte les unes par rapport aux autres.
